# EUROPEAN PATENT SPECIFICATION

(11) **EP 0 771 003 B1**
(45) Date of publication and mention of the grant of the patent: **24.07.2002**
(21) Application number: 96307657.5
(22) Date of filing: 23.10.1996
(51) Int. Cl.: G11B 21/12

(54) **Compound bearing assembly for the swing arm of a hard disc drive**
Mehrteiliger Lagerzusammenbau für den Schwenkarm eines Festplattenlaufwerks
Système à palier composé pour bras-support pivotant d'une unité de disque dur

(30) Priority: 25.10.1995 JP 30061095
(43) Date of publication of application: 02.05.1997
(73) Proprietor: MINEBEA KABUSHIKI-KAISHA, Kitasaku-gun, Nagano-ken (JP)
(72) Inventor: Obara, Rikuro, c/o Minebea K. K., Kitasaku-gun, Nagano-ken (JP)
(74) Representative: Warren, Keith Stanley

(56) References cited:
- EP-A- 0 613 134
- FR-A- 2 565 017
- US-A- 5 099 374
- US-A- 5 161 077
- US-A- 5 341 569
- US-E- R E34 684

## Description

This invention relates to a compound bearing assembly for supporting a swing arm of a hard disc drive.

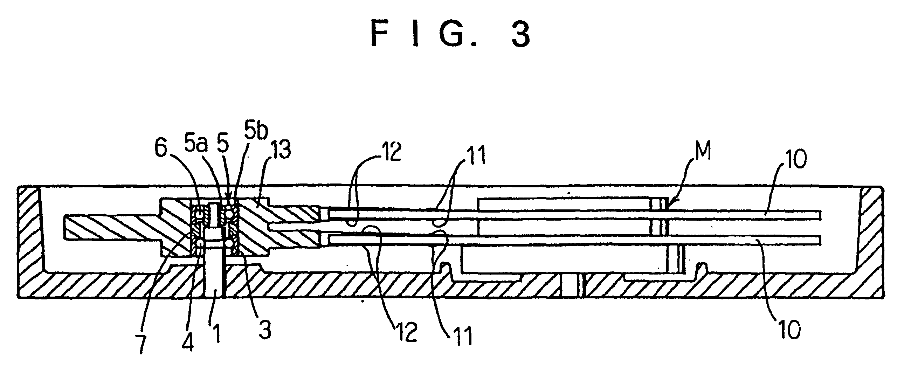

A prior art hard disc drive as shown in Fig. 3, comprises a magnetic disc 10 which is driven for rotation by a motor M, and a swing arm (or head arm) 12 carrying at the end thereof a magnetic head 11 for writing data in the disc 10 at a predetermined position thereof and reading out data from the disc 10 at a given position thereof.

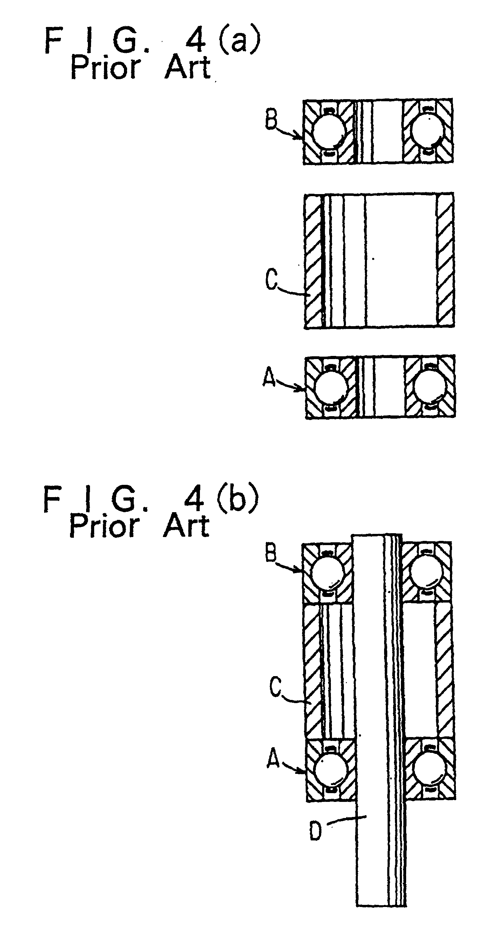

The swing arm 12 has a stem rotatably supported by a compound bearing assembly which uses two ball bearing units. As shown in Fig. 4, a prior art bearing assembly for supporting the swing arm comprises two ball bearing units A and B and a sleeve-like spacer C. These components of the bearing assembly are produced separately and supplied to the user, e.g. the hard disc drive manufacturer or the swing arm manufacturer, to be assembled on a shaft D.

In other words, with the conventional swing arm support bearing assembly, the user has to assemble the two ball bearing units on the shaft via the spacer. This poses the following problems.
(a) The shaft has to be manufactured so as to match the inner diameter of the inner race rings of the ball bearing units. In addition, its rigidity is subject to restrictions.
(b) The spacer which is a separate component from the two ball bearing units, must be highly accurately produced, with parallel and flat opposite end finished surfaces.
(c) Since the spacer is only fixedly interposed between the outer race rings of the two ball bearing units, it is necessary for the user to highly accurately assemble the assembly so as to have the sleeve and the shaft coaxial with each other.

For the above reasons, the assembly is not easily assembled by the user.

A further bearing assembly (for a hard disc drive motor) is described in Patent US 5,341,569 on which the preamble of claim 1 is based. This bearing includes a shaft having larger and smaller diameter portions. The smaller diameter portion has an inner raceway ring mounted thereon and inner raceway grooves are formed in the larger diameter portion and the inner raceway ring. A set of balls runs between each of the inner raceway grooves and a respective outer raceway groove formed in an inner surface of a unitary outer raceway member which surrounds both the larger and smaller diameter shaft portions. Manufacture of the outer raceway member accordingly requires very precise alignment of the two outer raceway grooves with each other.

An object of the invention is to provide a compound bearing assembly, which addresses the problems discussed above. It is an advantage of the invention that the assembly can be directly used on a swing arm of a hard disc drive, by a hard disc drive manufacturer of a swing arm manufacturer.

Thus according to the invention there is provided a combination for hard disc drive equipment including a compound bearing assembly, a hard disc drive swing arm having a boss fitted on and secured by means of adhesive to the compound bearing assembly; said compound bearing assembly comprising:
a stepped shaft having a first portion with a larger diameter than a second portion, said larger diameter portion having an inner raceway groove formed directly in an outer periphery thereof;
a plurality of first balls provided between said inner raceway groove, and a first outer raceway groove;
an inner race ring fitted on said smaller diameter portion of said stepped shaft with a plurality of second balls provided between the inner race ring and a second outer raceway groove,
characterised in that the bearing assembly further comprises:
a distinct first outer race ring disposed around said larger diameter portion and having said first outer raceway groove formed in an inner periphery thereof;
a ball bearing unit having said inner race ring, said plurality of second balls and an outer race ring in an inner periphery of which said second outer raceway groove is formed; and
a sleeve-like spacer surrounding a portion of said stepped shaft between said first outer race ring and said second outer race ring and having opposite end small diameter portions, said first outer race ring and said second outer race ring being fitted on said opposite end small-diameter portions, respectively and coupled thereto to form a compound sleeve member;
said first outer race ring, said sleeve-like spacer and said ball bearing unit being thereby integrally assembled on said stepped shaft;

In a preferred embodiment of the invention said inner race ring of said ball bearing unit and said larger diameter portion of said stepped shaft have substantially equal outer diameters, and said outer race ring of said ball bearing unit has substantially equal outer and inner diameters to said outer race ring disposed around said larger diameter portion so that all of said balls have the same diameter.

Embodiments of the present invention will now be described, by way of example, with reference to the accompanying drawings, in which:-
Fig. 1 is a sectional view showing a compound bearing assembly in a first embodiment of the invention;
Fig. 2 is a perspective view showing a hard disc drive;
Fig. 3 is a sectional view showing a swing arm supported by a compound bearing assembly in accordance with the invention; and
Figs. 4(a) and 4(b) are sectional views showing a prior art swing arm bearing assembly, Fig. 4(a) showing ball bearing units and a spacer before being assembled, Fig. 4(b) showing the ball bearing units and spacer having been assembled on a shaft.

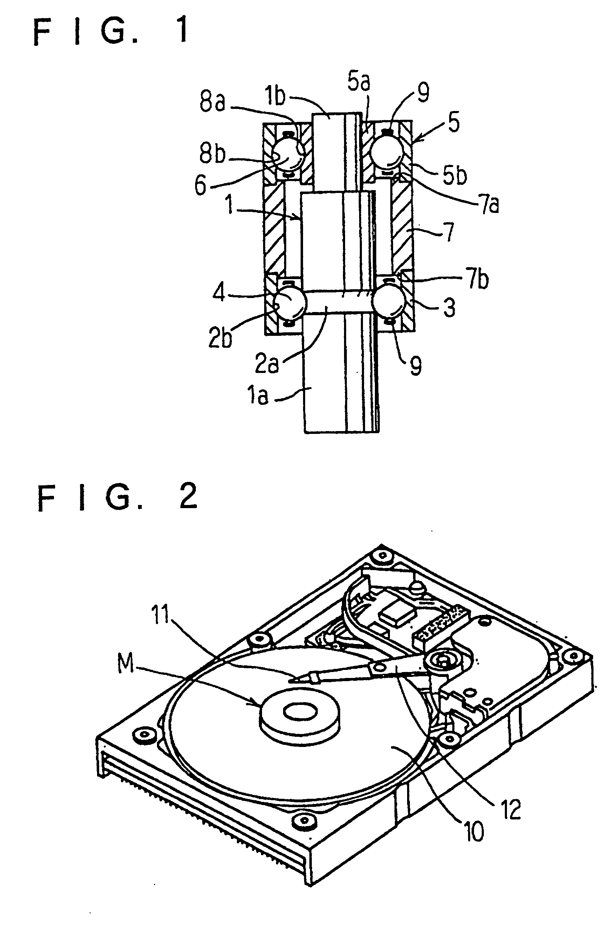

Referring to Fig. 1, a stepped shaft 1 has a first portion 1a which is larger in diameter than a second portion 1b, the larger diameter portion 1a having an inner raceway groove 2a formed directly in the outer periphery thereof.

An outer race ring 3 is provided around the large diameter portion 1a and assembled on the same with a plurality of balls 4 provided between an outer raceway groove 2b formed in its inner periphery and the inner raceway groove 2a in the larger diameter portion 1 a.

A ball bearing unit 5, which has an inner and an outer race ring 5a and 5b and a plurality of balls 6 provided therebetween, has the inner race ring 5a fitted on and secured to the smaller diameter portion 1b of the stepped shaft 1.

A sleeve-like spacer 7, surrounds the stepped shaft 1 and has opposite end small-diameter portions 7a and 7b with the outer diameter threreof set for snug fitting in the outer race ring 3 and the outer race ring 5b of the ball bearing unit 5. The term small-diameter portion herein refers to end portions of the spacer 7 of a smaller diameter than the main body of the spacer. The spacer 7 has its small-diameter portions 7a and 7b fitted in and secured to the outer race rings 3 and 5b.

The inner race ring 5a of the ball bearing unit 5 has a diameter equal to the outer diameter of the larger diameter portion 1 a, and the outer race ring 5b of the ball bearing unit 5 has equal outer and inner diameters to the outer and inner diameters, respectively, of the outer race ring 3 around the larger diameter portion 1a.

Raceway grooves 8a and 8b are formed in the inner and outer race rings 5a and 5b of the ball bearing unit 5, and located by ball retainers 9.

In constructing the assembly the inner race ring 5a of the ball bearing unit 5 is slidably fitted on the smaller diameter portion 1 b of the stepped shaft 1, then an adequate pre-load is applied to the outer end surface (i.e., the upper end surface in Fig. 1) of the inner race ring 5a, and in this state the inner race ring 5a is secured by means of an adhesive to the small-diameter portion 1 b of the stepped shaft 1.

In this way, the spacer and the outer race rings at the opposite ends thereof are coupled together into a sleeve-like outer race ring of the compound bearing assembly, and the outer ring, the spacer, and the ball bearing unit are assembled on the stepped shaft.

In the above embodiments, all the balls were the same in diameter, but it is possible to use balls having different diameters for the sides of the larger and smaller diameter portions, respectively.

The shaft of the compound bearing assembly thus obtained is projected from a base member of a hard disc drive by securing a stem of its larger-diameter portion to the base member. Then, a boss 13 of a stem of a swing arm 12 is fitted on and secured by means of an adhesive to the sleeve-like outer race ring.

The swing arm which is thus mounted on the compound bearing assembly thus can be rotated about the shaft thereof.

With a compound bearing assembly having the above construction, the following functions and effects are obtainable.
(a) Since the compound bearing assembly spacer and the outer race rings at the opposite ends thereof are coupled together into a sleeve-like outer race ring and the outer race ring, the spacer, the ball bearing unit and the balls are assembled on the shaft, the user need not assemble any of these components, and the compound bearing assembly can be readily and reliably mounted on a swing arm of a hard disc drive by fitting the swing arm stem boss 13 on and securing the same-by means of an adhesive to it.
(b) Since the inner raceway groove is formed directly in the outer periphery of the larger diameter portion of the stepped shaft in the bearing assembly, the conventional inner race ring is unnecessary, and correspondingly the shaft is partly increased in diameter producing a stepped shaft, which thus has increased rigidity.
(c) The spacer can be fabricated highly accurately by the bearing assembly manufacturer such that it conforms to the dimensions of the ball bearing unit. In addition, since the opposite end small-diameter portions of the spacer are fitted in and coupled to the outer race rings into the sleeve-like outer race ring of the compound bearing assembly, the accuracy of the coaxial coupling of the spacer, the outer rings and the shaft, and hence the accuracy of general assembly of the device, can be improved.
(d) Only a single conventional ball bearing unit, and hence only a single inner race ring, is needed, and it is possible to provide a bearing assembly having a reduced number of components.

## Claims

1. A combination for hard disc drive equipment including a compound bearing assembly, a hard disc drive swing arm (12) having a boss (13) fitted on and secured by means of adhesive to the compound bearing assembly; said compound bearing assembly comprising:
a stepped shaft (1) having a first portion (1a) with a larger diameter than a second portion (1b), said larger diameter portion (1a) having an inner raceway groove (2a) formed directly in an outer periphery thereof;
a plurality of first balls (4) provided between said inner raceway groove (2a), and a first outer raceway groove (2b);
an inner race ring (5a) fitted on said smaller diameter portion (1a) of said stepped shaft with a plurality of second balls (6) provided between the inner race ring (5a) and a second outer raceway groove (8b),
**characterised in that** the bearing assembly further comprises:
a distinct first outer race ring (3) disposed around said larger diameter portion (1a) and having said first outer raceway groove (2b) formed in an inner periphery thereof;
a ball bearing unit (5) having said inner race ring (5a), said plurality of second balls (6) and an outer race ring (5b) in an inner periphery of which said second outer raceway groove (8b) is formed; and
a sleeve-like spacer (7) surrounding a portion of said stepped shaft (1) between said first outer race ring (3) and said second outer race ring (5b) and having opposite end small diameter portions (7a, 7b), said first outer race ring (3) and said second outer race ring (5a) being fitted on said opposite end small-diameter portions (7a, 7b), respectively and coupled thereto to form a compound sleeve member;
said first outer race ring (3), said sleeve-like spacer (7) and said ball bearing unit (5) being thereby integrally assembled on said stepped shaft (1).

2. A combination as claimed in claim 1, wherein said inner race ring (5a) of said ball bearing unit (5) and said larger diameter portion (1a) of said stepped shaft (1) have substantially equal outer diameters, and said outer race ring (5b) of said ball bearing unit (6) has substantially equal outer and inner diameters to said outer race ring (3) disposed around said larger diameter portion (1b) so that all of said balls (4, 6) have the same diameter.

## Patentansprüche

1. Kombination für Festplattenlaufwerkausstattung, die einen mehrteiligen Lagerzusammenbau enthält, wobei ein Schwenkarm (12) eines Festplattenlaufwerks einen Vorsprung (13) aufweist, der an dem mehrteiligen Lagerzusammenbau befestigt und mittels Klebstoff daran gesichert ist; wobei der mehrteilige Lagerzusammenbau umfaßt:
eine abgestufte Achse (1), die einen ersten Abschnitt mit einem größeren Durchmesser (1a) als ein zweiter Abschnitt (16) umfaßt, wobei der Abschnitt mit dem größeren Durchmesser (1a) eine innere Laufringnut (2a) aufweist, die direkt in einem äußeren Umfang davon ausgebildet ist;
eine Vielzahl von ersten Kugeln (4), die zwischen der inneren Laufringnut (2a) und einer ersten äußeren Laufringnut (2b) vorgesehen sind;
einen inneren Laufring (5a), der an dem Abschnitt mit dem kleineren Durchmesser (1b) der abgestuften Achse befestigt ist, mit einer Vielzahl von zweiten Kugeln (6), die zwischen dem inneren Laufring (5a) und einer äußeren Laufringnut (8b) vorgesehen sind,
**dadurch gekennzeichnet, daß** der Lagerzusammenbau ferner umfaßt:
einen verschiedenen ersten äußeren Laufring (3), der um den Abschnitt mit dem größeren Durchmesser (1a) angeordnet ist und die erste äußere Laufringnut (2b) aufweist, die in einem inneren Umfang davon ausgebildet ist;
eine Kugellagereinheit (5), die den inneren Laufring (5a), die Vielzahl von zweiten Kugeln (6) und einen äußeren Laufring (5b) in einem inneren Umfang aufweist, aus der die zweite äußere Laufringnut (8b) ausgebildet ist; und
ein hülsenartiges Distanzstück (7), das einen Abschnitt der abgestuften Achse (1) zwischen dem ersten äußeren Laufring (3) und dem zweiten äußeren Laufring (5b) umgibt und entgegengesetzte Endabschnitte mit kleinem Durchmesser (7a, 7b) aufweist, wobei der erste äußere Laufring (3) und der zweite äußere Laufring (5a) an den jeweiligen entgegengesetzten Endabschnitten mit kleinem Durchmesser (7a, 7b) befestigt und zur Bildung eines mehrteiligen Hülsenglieds daran gekuppelt sind;
wobei der erste äußere Laufring (3), das hülsenartige Distanzstück (7) und die Kugellagereinheit (5) dadurch einstückig an der abgestuften Achse (1) zusammengebaut sind.

2. Kombination nach Anspruch 1, wobei der innere Laufring (5a) der Kugellagereinheit (5) und der Abschnitt mit dem größeren Durchmesser (1a) der abgestuften Achse (1) im wesentlichen gleiche äußere Durchmesser aufweisen, und der äußere Laufring (5b) der Kugellagereinheit (6) und der äußere Laufring (3), der um den Abschnitt mit dem größeren Durchmesser (1a) angeordnet ist, im wesentlichen gleiche äußere und innere Durchmesser aufweisen, so daß alle Kugeln (4, 6) denselben Durchmesser aufweisen.

## Revendications

1. Combinaison pour un équipement d'unité d'entraînement de disque dur comprenant un système à palier de roulement combiné, un bras pivotant (12) d'unité d'entraînement de disque dur ayant un bossage (13) ajusté dessus et fixé à l'aide d'un adhésif au système à palier de roulement combiné ; ledit système à palier de roulement combiné comprenant :
un arbre étagé (1) ayant une première portion (1a) avec un plus grand diamètre qu'une deuxième portion (1b), ladite portion à grand diamètre (1a) ayant une gorge de piste interne (2a) formée directement dans sa périphérie externe ;
une pluralité de premières billes (4) prévues entre ladite gorge de piste interne (2a), et une première gorge de piste externe (2b) ;
une bague de roulement interne (5a) ajustée sur ladite portion à petit diamètre (1a) dudit arbre étagé avec une pluralité de deuxièmes billes (6) prévues entre la bague de roulement interne (5a) et une deuxième gorge de piste externe (8b),
**caractérisée en ce que** le système à palier de roulement comprend en outre :
une première bague de roulement externe distincte (3) disposée autour de ladite portion à grand diamètre (1a) et ayant ladite première gorge de piste externe (2b) formée dans une périphérie interne de celle-ci ;
une unité de roulement à billes (5) ayant ladite bague de roulement interne (5a), ladite pluralité de deuxièmes billes (6) et une bague de roulement externe (5b) dans une périphérie interne dont est formée ladite deuxième gorge de piste externe (8b) ; et
une pièce d'écartement analogue à un manchon (7) entourant une portion dudit arbre étagé (1) entre ladite première bague de roulement externe (3) et ladite deuxième bague de roulement externe (5b), et ayant des portions de petit diamètre à extrémités opposées (7a, 7b), ladite première bague de roulement externe (3) et ladite deuxième bague de roulement externe (5b) étant ajustées sur lesdites portions de petit diamètre à extrémités opposées (7a, 7b), respectivement, et étant couplées à celles-ci pour former un élément formant manchon combiné ;
ladite première bague de roulement externe (3), ladite pièce d'écartement analogue à un manchon (7) et ladite unité de roulement à billes (5) étant ainsi assemblées en une seule pièce sur ledit arbre étagé (1).

2. Combinaison selon la revendication 1, dans laquelle ladite bague de roulement interne (5a) de ladite unité de roulement à billes (5) et ladite portion à grand diamètre (1a) dudit arbre étagé (1) ont des diamètres externes sensiblement identiques, et ladite bague de roulement externe (5b) de ladite unité de roulement à billes (6) a des diamètres externe et interne sensiblement égaux à ceux de ladite bague de roulement externe (3) disposée autour de la portion à grand diamètre (1b), de sorte que toutes lesdites billes (4, 8a) ont le même diamètre.
